(19) Europäisches Patentamt

**European Patent Office**

**Office européen des brevets**

(11) Numéro de publication: **0 322 005 B1**

(12) **FASCICULE DE BREVET EUROPEEN**

(45) Date de publication de fascicule du brevet: **02.02.94**

(21) Numéro de dépôt: **88202636.2**

(22) Date de dépôt: **23.11.88**

(51) Int. Cl.5: **G01S 13/34**, G01S 13/42, G01S 13/89, H01Q 3/22

(54) **Senseur radioélectrique pour l'établissement d'une carte radioélectrique d'un site.**

(30) Priorité: **24.11.87 FR 8716251**

(43) Date de publication de la demande:
**28.06.89 Bulletin 89/26**

(45) Mention de la délivrance du brevet:
**02.02.94 Bulletin 94/05**

(84) Etats contractants désignés:
**DE FR GB**

(56) Documents cités:
**EP-A- 0 005 642**
**DE-A- 3 002 148**
**FR-A- 1 552 054**
**US-A- 3 500 403**

**INTERNATIONAL CONFERENCE RADAR '87, Londres, 19-21 octobre 1987, pages 448-452, Stevenage, Herts, GB; M. BARRETT et al.: "An X-band FMCW navigation radar"**

**THE RADIO AND ELECTRONIC ENGINEER, vol. 42, no. 7, juillet 1972, pages 344-348, McGraw-Hill, New York, US; A. TONKIN et al.: "An application of correlation to radar systems"**

(73) Titulaire: **THOMSON-TRT DEFENSE**
**88, rue Brillat Savarin**
**F-75013 Paris(FR)**

(72) Inventeur: **Paturel, Serge**
**Societe Civile S.P.I.D.**
**209 rue de l'Université**
**F-75007 Paris(FR)**
Inventeur: **Allezard, Roland**
**Societe Civile S.P.I.D.**
**209 rue de l'Université**
**F-75007 Paris(FR)**

(74) Mandataire: **Benoit, Monique et al**
**THOMSON-CSF**
**SCPI**
**B.P. 329**
**50, rue Jean-Pierre Timbaud**
**F-92402 Courbevoie Cédex (FR)**

EP 0 322 005 B1

IEEE TRANSACTIONS ON AEROSPACE AND ELECTRONIC SYSTEMS, vol. AES-20, no. 4, juillet 1984, pages 363-400, IEEE, New York, US; D.A. AUSHERMAN et al.: "Developments in radar imaging"

IEE CONFERENCE ON AIR TRAFFIC CONTROL SYSTEMS ENGINEERING AND DESIGN, Londres, 13-17 mars 1967, pages 19-22, IEE; N.J. WITHERS et al.: "High resolution F.M.C.W. radar for emergency-vehicle guidance in fog"

## Description

L'invention concerne un senseur radioélectrique muni d'un support et d'une antenne émettrice-réceptrice, pour l'établissement d'une carte radioélectrique d'un site, après une détection, de durée TM, ladite antenne, fixée rigidement au support dudit senseur, étant du type à balayage en gisement d'angle $\alpha_d$ d'un pinceau de rayonnement provoqué par excursion de la fréquence émise F, ledit senseur qui fonctionne à une fréquence comprise entre 1 et 100 GHz étant du type à onde continue modulée en fréquence et comportant à cet effet un générateur de rampe de tension qui commande un générateur de signal hyperfréquence, de fréquence F, modulé à peu près linéairement en fréquence selon une dent de scie pendant ladite durée TM selon une excursion de fréquence ΔF, TM et ΔF étant fixes et prédéterminés, des moyens pour réaliser le battement entre l'onde émise et l'onde reçue en écho pour engendrer un signal de battement soustractif $F_b$ de fréquence $f_b$, ledit senseur comportant en outre en aval desdits moyens de battement un circuit de traitement analogique du signal comprenant des moyens d'amplification et de filtrage du signal $F_b$.

L'invention peut avoir des applications aussi bien civiles que militaires. Fixé à un aéronef, un tel senseur radioélectrique peut, à basse altitude, être utilisé pour former une image du paysage proche situé à l'avant de l'aéronef. De même, placé sur le toit d'une usine, le même senseur peut assurer une fonction de surveillance, par formation d'image(s) radioélectrique(s) des abords de l'usine.

Le genre de carte radioélectrique considéré ici est connu en langue anglaise sous le nom de PPI pour "Plan Position Indicator". On connaît des dispositifs du type mentionné en préambule, avec lesquels on peut réaliser des cartes radioélectriques du sol, tel par exemple le radar dit "Antilope" utilisé sur les avions de chasse français "Mirage 2000", et fabriqué par les sociétés ELECTRONIQUE SERGE DASSAULT et THOMSON-CSF. Ces dispositifs connus sont des radars à impulsion comportant une antenne mobile pour réaliser le balayage sectoriel nécessaire à l'établissement de la carte en coordonnées polaires. Il s'agit dans ce cas d'une antenne émettrice-réceptrice dont le support est constitué par une plateforme stabilisée. Pour compenser les mouvements parasites de tangage, de roulis et de lacet de l'avion, la position de la plateforme stabilisée est contrôlée de façon que cette plateforme reste en permanence parallèle à elle-même, dans une direction prédéterminée. Les inconvénients de ce dispositif de l'art antérieur sont sa complexité, sa fragilité et son coût élevé, dus essentiellement aux deux mouvements relatifs combinés de l'antenne.

Le brevet US-A 3 500 403 décrit un senseur radioélectrique du type FMCW, muni d'un support et d'une antenne émettrice-réceptrice fixes, qui permet de visualiser un site sur l'écran d'un oscilloscope sous forme d'un secteur circulaire, par génération d'un signal analogique résultant de l'imbrication de deux dents de scie de périodes nettement différentes. On connaît aussi la publication : International Conference RADAR 87, Londres, 19-21 Octobre 1987, pages 448-452 ; M. BARRET et al. : "An X-band FMCW navigation radar". Ce dernier document enseigne comment réaliser une carte radioélectrique du type PPI au moyen d'un radar FMCW utilisant des techniques numériques et motorisé en rotation.

Un but de la présente invention est de réaliser un senseur radioélectrique, pour l'établissement d'une carte radioélectrique, qui utilise une antenne fixe.

Un autre but de l'invention est de réaliser un senseur radioélectrique, pour l'établissement d'une carte radioélectrique, qui associe à une antenne fixe un radar du type à onde continue modulée linéairement en fréquence (FM-CW).

Encore un autre but de l'invention est de réaliser un senseur radioélectrique, pour l'établissement d'une carte radioélectrique, qui puisse s'affranchir d'une plateforme stabilisée lorsqu'il est fixé à un engin mobile.

Ces buts sont atteints et les inconvénients de l'art antérieur sont atténués ou supprimés grâce au fait que le senseur radioélectrique défini au premier paragraphe est remarquable en ce qu'il comporte en outre, pour l'établissement en coordonnées polaires de ladite carte radioélectrique :
- des moyens de numérisation au moins du signal $F_b$ amplifié et filtré,
- une mémoire d'échantillons temporels qui contient au moins les q échantillons du signal $F_b$ prélevés au cours de la durée TM ou de ses multiples (plusieurs fois TM),
- une mémoire d'échantillons fréquenciels de carte radioélectrique et
- des moyens de traitements numériques effectuant au moins une transformation temporelle-fréquencielle sur des suites SU d'échantillons temporels successifs, prélevés avec un léger décalage retard par rapport à la durée TM dans la mémoire d'échantillons temporels, chaque suite SU correspondant à une variation de balayage en gisement $\Delta \alpha_{dc}$ égale à l'ouverture en gisement $\theta_d$, de 1 à 2 degrés, dudit pinceau de rayonnement, les suites SU, au nombre de p, typiquement compris entre 20 et 50, comportant un nombre n d'échantillons, n étant typiquement compris entre 200 et 300, et fournissant à la mémoire d'échantillons fréquenciels des suites SV d'échantillons fréquenciels, à raison d'une suite SV pour chaque suite SU, l'amplitude de chaque échantillon fréquenciel étant représentative d'un point dudit site et son adresse étant représentative des coordonnées polaires de ce point du site, de façon telle que chaque suite SV constitue au moins pour partie une partie de radiale de la carte.

L'idée de base de l'invention est d'utiliser un radar FM-CW émettant une dent de scie de fréquence par exemple à pente négative présentant des valeurs élevées de durée et d'excursion de fréquence fixes, respectivement égales par exemple à : TM = 40 ms et $\Delta F$ = 300 MHz. A chaque valeur particulière $f_c$ de la fréquence émise F correspond de façon bijective et linéaire une valeur correspondante $\alpha_{dc}$ de l'angle de gisement $\alpha_d$ de l'axe du pinceau de rayonnement émis par l'antenne, et on considère une petite plage $\Delta f_c$ autour de la valeur $f_c$ pour laquelle l'angle de gisement varie d'une valeur $\Delta\alpha_{dc}$, pendant une durée $\Delta TM$. On fait en sorte de choisir, pour cette plage, une valeur angulaire, pour une radiale de la carte radioélectrique à établir, qui soit du même ordre que l'ouverture en gisement $\theta_d$ du pinceau de rayonnement, soit environ 1° à 2°. Le signal de battement $F_b$ à fréquence intermédiaire $f_b$ pendant la durée $\Delta TM$ est échantillonné de façon à constituer une suite d'échantillons temporels puis, par transformation temporelle-fréquencielle, par exemple au moyen d'une Transformée de Fourier Rapide (TFR), converti en échantillons fréquenciels qui, comme expliqué plus loin, sont représentatifs, par le couple amplitude-distance qui les caractérise, des points, ou surfaces élémentaires, situés sur la radiale à établir considérée. En prenant ainsi diverses plages du signal $F_b$ qui correspondent à autant de plages $\Delta f_c$ comprises dans l'excursion de fréquence $\Delta F$ de la dent de scie du signal émis ainsi que la valeur moyenne associée $\alpha_d$ de l'angle de gisement, il est possible d'établir la carte radioélectrique recherchée. Les principales caractéristiques du senseur décrit sont les suivantes : son fonctionnement est basé sur une imagerie radioélectrique du type PPI du sol à la fréquence d'observation, typiquement centrée sur 15 GHz et à l'incidence d'observation, l'ouverture en site $\theta_s$ du pinceau de rayonnement émis étant de l'ordre de 20 à 30 degrés en dessous de l'horizontale. Pour cette fréquence de 15 GHz et à incidence rasante, le coefficient de rétrodiffusion est encore différencié d'une dizaine de dB entre le béton et l'herbe. Comme déjà indiqué ci-dessus, la technique de formation de l'image utilise une antenne ne nécessitant ni balayage mécanique ni même de stabilisation selon deux ou trois axes si l'on souhaite supprimer aussi cette stabilisation. Ceci entraîne comme avantages : une simplification importante dans la réalisation du senseur, une grande robustesse et une diminution de la maintenance au cours de la vie opérationnelle du senseur, ces avantages étant tous liés à la suppression partielle ou totale des mouvement mécaniques complexes habituellement imposés à l'antenne.

Le senseur peut être fixé au sol ou à un bâtiment fixe ; il peut aussi être monté sur un véhicule tel que bateau, véhicule terrestre ou aéronef. Le véhicule porteur est, en fonctionnement, animé de mouvements autour de son centre de gravité ; généralement ces mouvements sont lents si on les compare à la vitesse de détection et de calcul du senseur radioélectrique ; cependant, lorsqu'il s'agit d'un aéronef, ces mouvements peuvent être assez rapides pour fausser la carte radioélectrique de quelques pour cent, en ce qui concerne la position des points et nécessiter une correction. Comme on le verra ci-dessous, une correction en tangage n'est jamais nécessaire, ce qui constitue un avantage supplémentaire du senseur selon l'invention ; par contre, il peut s'avérer nécessaire de corriger les mouvements de lacet.

Un premier mode de réalisation de l'invention est remarquable en ce que l'aéronef porteur du senseur est muni d'une centrale à inertie et que ledit support du senseur est une plateforme stabilisée solidaire de l'aéronef, dont la stabilisation est obtenue à partir de la centrale à inertie de l'aéronef ; il s'agit là d'un type de correction des mouvements parasites du véhicule porteur connu en soi, qui est applicable au senseur selon l'invention. Cependant, étant donnée la simplification associée à une sécurité de fonctionnement que l'on souhaite introduire pour l'établissement d'une carte radioélectrique d'un site, il est avantageux que le support du senseur soit lui-même rigidement fixé à l'aéronef même lorsque ce dernier est soumis à de rapides mouvements de tangage et de lacet.

En conséquence, un autre mode de réalisation anti-lacet d'un senseur radioélectrique monté sur un aéronef muni d'une centrale à inertie est remarquable en ce que les p suites SU, sont adjacentes et comportent le même nombre d'échantillons sur la durée TM de façon que l'égalité pn = q soit vérifiée, que le numéro d'ordre i (i variant de 1 à p) de chaque suite SU constitue l'adresse de la radiale constituée par la suite SV déduite de chaque suite SU considérée et que lesdits moyens de traitements numériques calculent le nombre n de façon à le rendre proportionnel à la valeur $\alpha_{dmax}-\theta_l$, $\theta_l$ étant la valeur de l'angle de lacet comptée en valeur algébrique pendant la durée TM.

Un autre mode de réalisation anti-lacet d'un senseur radioélectrique monté sur un aéronef muni d'une centrale à inertie est remarquable en ce que lesdits moyens de numérisation échantillonnent le signal SG émis par ledit générateur de rampe de tension, les échantillons du signal SG étant emmagasinés dans ladite mémoire d'échantillons temporels, et que lesdits moyens de traitement calculent le début de chaque suite SU en prenant en compte une valeur d'échantillon du signal SG et, le cas échéant, une valeur associée de l'angle de lacet $\theta_l$.

La correction des mouvements parasites de lacet peut ainsi s'effectuer de façon simple dans la partie de traitement numérique du senseur.

La description qui suit en regard des dessins annexés, le tout donné à titre d'exemple, fera bien comprendre comment l'invention peut être réalisée.

La figure 1 représente le senseur radioélectrique muni d'un support et d'une antenne émettrice-réceptrice.

La figure 2 illustre la position dans le sens vertical du faisceau de rayonnement émis par l'antenne.

La figure 3 illustre la position dans le sens horizontal du faisceau de rayonnement émis par l'antenne.

La figure 4 est un schéma synoptique du senseur muni de son boîtier électronique de traitement de signal.

La figure 5a représente en fonction du temps la fréquence du signal émis et du signal reçu en écho et la figure 5b le signal $F_b$ résultant.

La figure 6 est un diagramme de temps qui montre les variations comparées de l'angle de gisement du faisceau de rayonnement et de la fréquence du signal émis.

La figure 7 illustre en perspective une radiale de la carte radioélectrique à établir.

La figure 8a est une représentation graphique d'une suite SV d'échantillons fréquenciels.

La figure 8b représente schématiquement la carte du site à établir.

La figure 9 est une vue en perspective d'un mode de réalisation de l'antenne qui convient pour le senseur selon l'invention.

La figure 10 est une vue en plan avec arrachement de l'intérieur d'une moitié de l'antenne de la figure 9.

La figure 11 est une vue selon la coupe XI-XI de la figure 10.

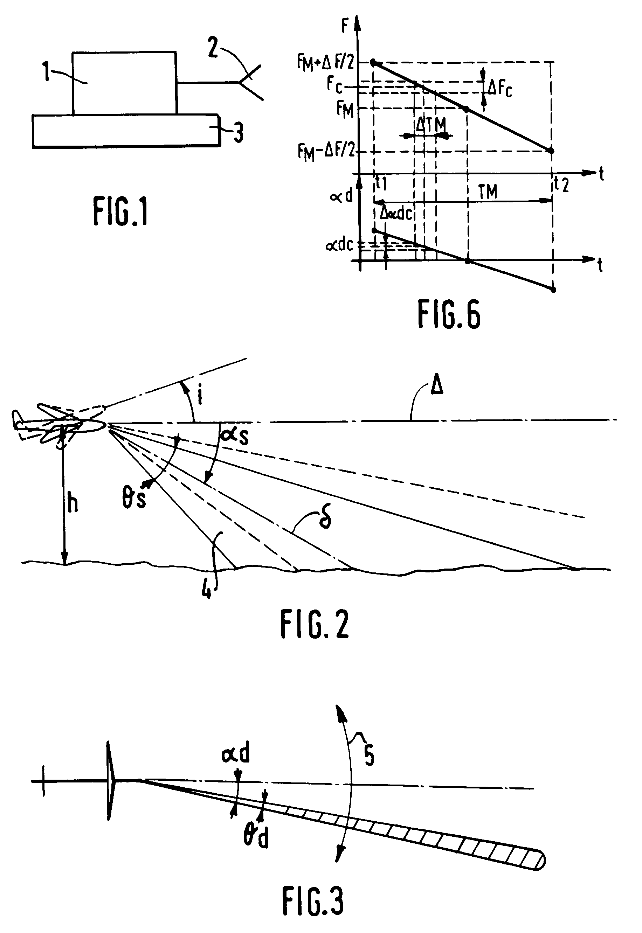

Sur la figure 1 on a représenté de façon très schématique un senseur radioélectrique 1 muni d'une antenne-réceptrice 2, l'ensemble étant rigidement fixé à un support 3. Le support 3 peut être mis en place, fixe, sur le toit d'un bâtiment non représenté tel qu'une usine. Le support 3 peut aussi être porté par un engin mobile, un véhicule terrestre, un bateau ou un aéronef, non représentés, cas dans lequel le support peut être soit une plateforme stabilisée sous la commande d'une centrale à inertie de l'engin mobile ou un support gyro-stabilisé, soit un support rigidement fixé à l'engin mobile.

Le senseur 1 est destiné à former une image radioélectrique du site environnant. Pour cela, un faisceau de rayonnement électromagnétique est émis par l'antenne émettrice-réceptrice 2. Ce faisceau de rayonnement (4, figure 2), qui a la forme d'un pinceau, a une ouverture en site $\theta_s$ de l'ordre de 20 à 30 degrés et une ouverture en gisement $\theta_d$ de l'ordre de 1,5 à 3 degrés. Soit $\Delta$ l'axe longitudinal du senseur qui est horizontal lorsque le senseur est dans sa position nominale et soit $\alpha_S$ l'angle que fait l'axe $\delta$ du faisceau, dirigé vers le bas, avec l'axe $\Delta$. On considère par ailleurs l'angle d'incidence i que fait un plan horizontal passant par l'axe $\Delta$ avec l'axe X de l'engin porteur, cet angle i, compté positivement ou négativement n'étant à prendre en compte que lorsque le senseur 1 est monté fixe sur un véhicule. La valeur de $\alpha_S$ est choisie de façon telle que le faisceau 4 reste toujours dirigé vers le bas dans sa totalité. Ceci revient à dire que si $i_{max}$ est la valeur maximale de i, on a la relation suivante :

$$\alpha_S > \theta_S/2 + i_{max}$$

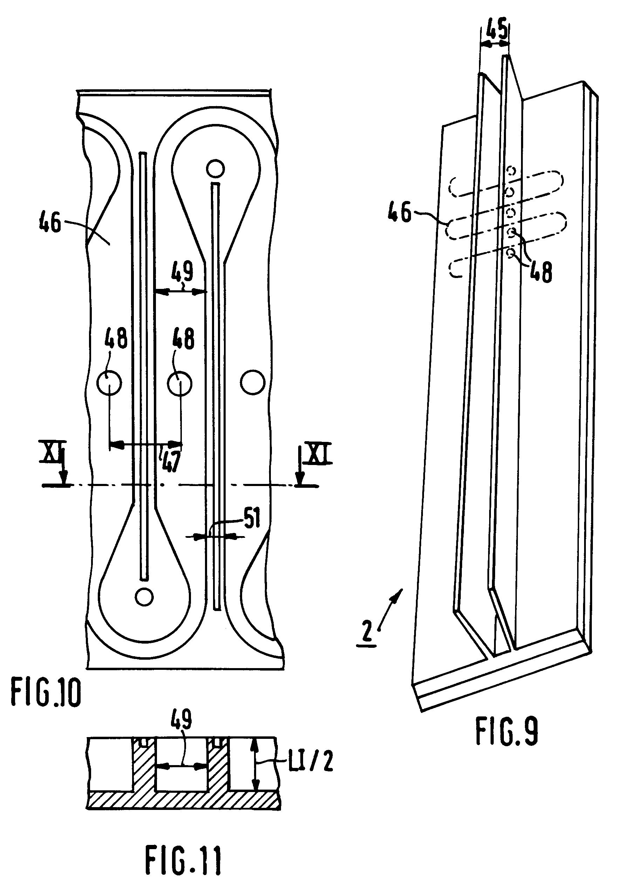

par exemple, pour $\theta_S = 20°$, et $i_{max} = 7°$, on choisit $\alpha_S > 17°$. On a représenté à la figure 2 en trait interrompu l'orientation du faisceau 4 pour un angle d'incidence i vers le haut. Dans ces conditions, on est assuré qu'il y a toujours une partie du faisceau 4 qui soit dirigée vers le sol entre quelques dizaines de mètres et quelques centaines de mètres vers l'avant du senseur. Par ailleurs, le faisceau 4 effectue un balayage sectoriel en gisement de l'ordre de quelques dizaines de degrés de part et d'autre de l'axe $\Delta$, l'ouverture en gisement $\alpha_d$ de l'axe $\delta$ du faisceau étant par exemple comprise entre + 15° et - 15°, (ou entre 0 et 30°, soit entre 0 et $\alpha_{dmax}$), comme l'indique la flèche double 5 sur la figure 3. Dans l'art connu, ce balayage du pinceau de rayonnement est obtenu par action mécanique sur l'antenne, c'est-à-dire par commande en rotation de cette dernière par un moteur, ce qui est cher, provoque des risques de panne et requiert une maintenance soigneuse. Selon l'invention, le balayage en gisement est obtenu par excursion de la fréquence émise F. On notera que ce type de balayage est connu en soi, notamment de l'ouvrage "Radar Handbook" de Skolnik, édité par Mac-Graw Hill, chapitre 13, mais pas dans son application à l'établissement d'une carte radioélectrique. Un exemple d'antenne à utiliser pour la mise en oeuvre de l'invention est décrit ci-dessous en référence aux figures 9, 10 et 11.

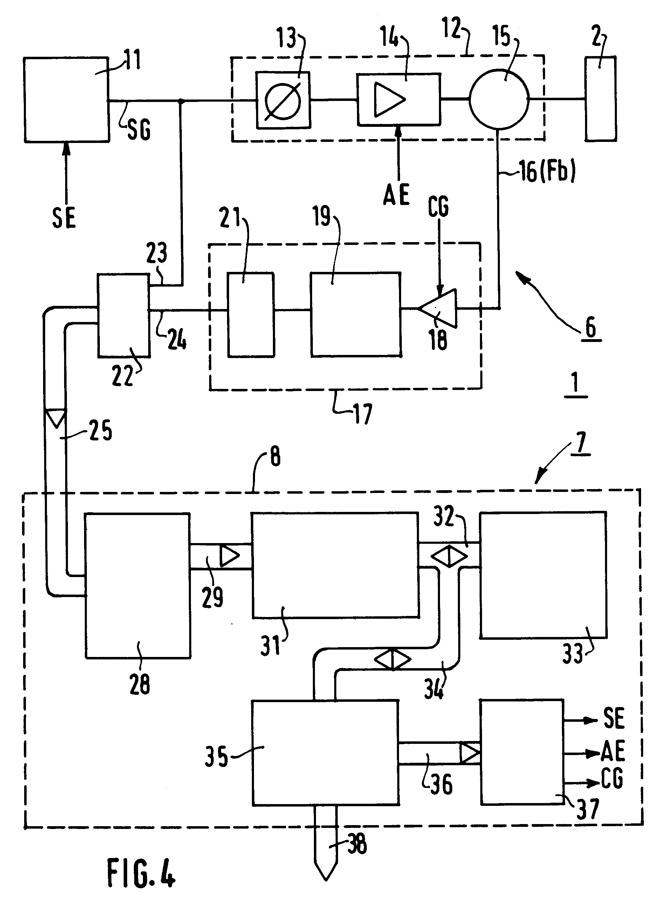

Le senseur utilisé est décrit ci-après en référence à la figure 4. Le principe de fonctionnement est celui d'un radar à onde continue ou entretenue, modulée linéairement en fréquence (FM-CW). La structure de ce radar se rapproche de celle d'un radioaltimètre FM-CW à deux antennes, l'une pour l'émission, l'autre pour la réception tel par exemple le radioaltimètre décrit dans le brevet français 1 557 670, ou à une seule antenne émettrice-réceptrice, cette dernière catégorie de radioaltimètre, qui permet notamment un compactage accru du matériel, étant plus récente.

Les formules de base qui caractérisent le fonctionnement d'un radioaltimètre ou d'un radar FM-CW, dans le cas où la modulation de fréquence est rigoureusement proportionnelle au temps, sont les suivantes :

$$f_b = \frac{\tau.\Delta F}{T_e} \qquad\qquad (1)$$

$$\tau = \frac{2d}{c} \qquad (2)$$

formules dans lesquelles :

$f_b$ : fréquence de battement soustractif entre onde émise et onde reçue en écho (du sol ou d'un objet), dans le signal de sortie du mélangeur,

$\tau$ : temps de retard entre onde émise et onde reçue en écho.

$\Delta F$ : excursion de fréquence de la dent de scie du signal émis, maintenue fixe,

$T_e$ : durée de la dent de scie du signal émis,

$d$ : distance du sol ou d'un objet,

$c$ : vitesse de propagation d'une onde électromagnétique dans l'air.

Des relations équivalentes existent lorsque la modulation de fréquence n'est pas strictement linéaire. On ne décrira, à titre d'exemple, que le cas simple de relations linéaires.

Pour un radioaltimètre, on choisit généralement de maintenir à une valeur $f_{b0}$ fixe la fréquence de battement $f_b$ carastéristique du sol. Il en résulte que la durée $T_e$ de la dent de scie du signal émis constitue une mesure de la distance $d$ recherchée, ce qui se déduit aisément de la combinaison des formules (1) et (2) qui fait alors apparaître une proportionnalité entre $d$ et $T_e$. Par ailleurs la dent de scie est émise systématiquement de façon répétitive.

Par contre, dans le radar selon l'invention, c'est la durée $T_e$ qui, outre l'excursion de fréquence $\Delta F$, est maintenue à une valeur constante TM et c'est alors la fréquence de battement $f_b$ qui constitue une mesure de la distance $d$ selon la formule :

$$f_b = \frac{2\ \Delta F}{c.T}\ d \qquad\qquad (3)$$

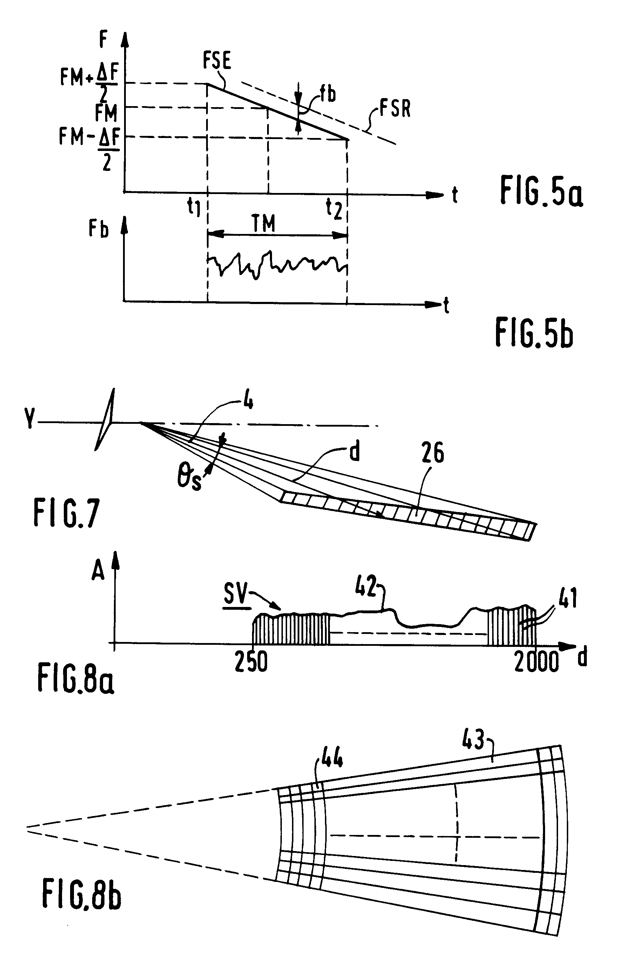

On a représenté aux figures 5a et 5b, en fonction du temps, respectivement la fréquence F du signal émis, et le signal $F_b$ résultant qui consiste en la superposition des différents échos reçus simultanément du sol. Sur la figure 5a est représentée la fréquence instantanée $f_b$ du signal $F_b$, qui est la différence d'ordonnées, constante entre la fréquence du signal émis FSE et la fréquence du signal de retour ou d'écho, FSR, et on notera que le signal FSR et la fréquence $f_b$ sont fictifs, en ce qu'ils caractérisent un écho moyen inexistant.

Ceci conduit à une structure plus simple du radar du fait qu'une boucle d'asservissement munie d'un discriminateur de fréquence n'est plus nécessaire entre le mélangeur et le générateur de signal hyperfréquence. Dans ce cas, l'information de distance $d$ peut être obtenue par une analyse du spectre en fréquence ce qui correspond mieux à une application radar car on obtient une information simultanée de toutes les cibles présentes. Un inconvénient de ce principe est la large bande passante nécessaire pour le récepteur, dans la mesure où l'on souhaite effectuer une détection d'objets dans une fenêtre en distance très étendue. Cependant, pour les applications envisagées qui concernent le radar selon l'invention, les fenêtres en distance souhaitées sont comprises entre quelques dizaines et quelques centaines de mètres, ce qui limite l'inconvénient précité.

On connaît des radars tels que précisés ci-dessus, qui ont la particularité de n'être pas nécessairement périodiques, c'est-à-dire que l'émission d'une dent de scie à un instant donné peut suffire à un cycle de fonctionnement, raison pour laquelle on les qualifie de radars FM-CW intermittents ou interrompus. Le radar qui constitue l'essentiel du senseur selon l'invention peut présenter cette particularité et fonctionne à une fréquence F comprise entre 1 et 100 GHz.

6

Le senseur 1 représenté à la figure 4 comporte deux principaux sous ensembles qui sont un radar 6 du type décrit aux paragraphes précédents, représenté en haut de la figure, et un boîtier électronique 7 de traitement représenté dans un cadre en trait interrompu 8 au bas de la figure.

Le radar 6 fonctionne par exemple dans la bande des 15 GHz et comprend les éléments suivants :

- une chaîne directe constituée par la succession en cascade d'un générateur de rampe de tension 11, une tête hyperfréquence 12 comportant un oscillateur commandé en tension (VCO) 13, un amplificateur 14, un mélangeur 15, l'antenne émettrice-réceptrice 2 et, à partir d'une deuxième sortie 16 du mélangeur 15,
- une chaîne d'amplification et de correction en fréquence intermédiaire 17 constituée par un amplificateur 18, un premier filtre passe-bande 19 et un deuxième filtre passe-bande 21,
- un convertisseur analogique-numérique 22 constituant des moyens de numérisation qui reçoit sur une première entrée 23 le signal émis par le générateur de rampe 11 et sur une deuxième entrée 24 le signal de sortie du filtre 21.

Sur le schéma de la figure 4, les moyens de battement entre ondes émise et reçue sont réalisés simplement par l'utilisation du mélangeur 15 qui est un mélangeur homodyne. De façon connue, non représentée, on peut aussi utiliser un circulateur ou un coupleur directif à la place du mélangeur 15, relié à un mélangeur qui reçoit sur une deuxième entrée, en provenance d'un coupleur, à titre d'oscillation locale, une fraction du signal émis par le VCO 13, la sortie de ce mélangeur étant raccordée au conducteur 16 de la figure 4.

Le générateur 11, qui pilote le VCO 13, est commandé par un signal d'émission SE issu du boîtier de traitement 7. L'émission de puissance de la tête hyperfréquence 12 est d'environ 1,5 W à la fréquence utile. La tête hyperfréquence reçoit, sur une entrée séparée de l'amplificateur 14, un signal de commande d'arrêt d'émission AE en provenance du boîtier de traitement 7. L'antenne 2 émet un pinceau de rayonnement, déjà décrit ci-dessus, avec une excursion de fréquence $\Delta F$ de l'ordre de 300 MHz, de part et d'autre d'une fréquence centrale FM égale à 15,2 GHz.

La sortie 16 du mélangeur 15 est le siège d'un signal de battement soustractif $F_b$. Le signal $F_b$ est fourni à l'amplificateur 18 dont le gain est commandé par un signal de commande CG provenant du boîtier de traitement 7, afin d'adapter au mieux le niveau du signal à la dynamique de codage située en aval. Le filtre passe-bande 19 sélectionne la plage de fréquences qui correspond aux distances d'observation prévues allant de $d_{mini}$, de l'ordre de quelques dizaines de mètres à $d_{maxi}$, de l'ordre de quelques centaines de mètres ; aux fréquences hautes, il joue le rôle de filtre anti-repliement pour l'opération d'échantillonnage qui suit. Le filtre passe-bande 21 a pour but de compenser partiellement la loi en $1/d^3$ du niveau de l'écho radar en fonction de la distance ; en relevant progressivement le niveau des signaux aux fréquences élevées, il contribue à donner à tous les échos situés dans la gamme de distance allant de $d_{mini}$ à $d_{maxi}$ la même plage de variation en amplitude et donc la même résolution de codage.

L'information sur la fréquence émise portée par le conducteur 23 ainsi que l'information relative aux échos sont transmises sous forme numérique par le convertisseur 22 au boîtier électronique de traitement 7 au moyen d'un bus 25. A cet effet, le convertisseur 22 comporte un échantillonneur qui échantillonne par exemple à la fréquence de 250 kHz les informations précitées obtenues sous forme analogique sur les conducteurs 23 et 24. La dent de scie d'émission de durée TM est fixe, par exemple TM = 40 ms et sa fréquence est comprise entre deux seuils fixes prédéterminés. Dans l'exemple numérique choisi, le nombre d'échantillons du signal de battement filtré et numérisé est, pour une dent de scie donnée, égal à 4000. On examine à présent, en référence à la figure 6, ce qui se passe localement pendant une durée $\Delta TM$ comprise dans la durée TM, pendant laquelle le signal émis évolue autour d'une fréquence $F_c$ située entre $F_M + \Delta F/2$ et $F_M - \Delta F/2$, dans la bande :

$$F_C - \frac{\Delta F_C}{2}, \qquad F_C + \frac{\Delta F_C}{2}.$$

On notera que, sur la figure 6, on a représenté en haut une dent de scie du signal d'émission à pente négative ; on pourrait aussi utiliser des dents de scie à pente positive.

Le faisceau radar 4 a une orientation en gisement $\alpha_d$ qui varie de $\Delta \alpha_{dc}$ autour de la valeur $\alpha_{dc}$. La variation angulaire $\Delta \alpha_{dc}$ considérée est du même ordre que l'ouverture en gisement $\theta_d$ soit un à quelques degrés. A ces variations de grandeurs analogiques est associée sur le bus 25 une suite de N échantillons du signal de battement $F_b$ amplifié et filtré comme décrit ci-dessus. Si l'on applique à ces N échantillons un procédé d'analyse spectrale, par exemple une transformée de Fourier, on obtient une transformation temporelle-fréquencielle, l'ensemble des fréquences considérées étant les fréquences $f_b$ représentatives des échos du sol pendant le temps $\Delta$TM, fréquences qui sont elles-mêmes représentatives de la distance d des échos comme représenté à la figure 7. A chaque durée $\Delta$TM peut ainsi être associée une étroite bande de terrain située dans un sens radial à l'avant du senseur et qui est, en première approximation, assimilable à une radiale du paysage analysé en coordonnées polaires ; à cette radiale, il est possible de faire correspondre, par l'intermédiaire du conducteur 23 et du convertisseur 22 sur le bus 25, un échantillon représentatif de l'angle $\alpha_{dc}$ associé. On notera qu'en procédant de la façon décrite, on n'obtient pas en toute rigueur une carte en coordonnées polaires du site ; en effet, pour qu'il en soit ainsi, il faudrait que le pinceau de rayonnement effectue un balayage en site par pas, le pinceau étant fixe pendant la durée $\Delta$TM, alors que ce balayage est continu. D'autre part, le module en coordonnées polaires d'un point du site est égal à D, cette distance D étant associée à la distance d par la relation :

$$D = \sqrt{d^2 - h^2}$$

dans laquelle h est la hauteur du senseur par rapport au sol. La radiale obtenue engendre donc des échos très légèrement brouillés par rapport aux radiales théoriques et, pour un pas en distance fixe $\Delta$d donné, le pas en distance $\Delta$D est variable de façon à décroître légèrement lorsque la distance d croît le long de la radiale. Ces deux imprécisions n'affectent cependant pas la topologie du site à analyser et elles peuvent être corrigées, au moins au premier ordre, par des traitements numériques appropriés à la portée de l'informaticien moyen dans le boîtier électronique de traitement 7. D'autres imprécisions et déformations de la carte radioélectrique s'ajoutent aux précédentes, lorsque le senseur est porté par un engin mobile, et résultant notamment de l'effet Doppler, des mouvements de lacet et de roulis de l'engin porteur.

En procédant à l'analyse spectrale du signal $F_b$, on peut donc extraire, pour chaque position en gisement du pinceau de rayonnement, les informations correspondant à une radiale de la carte. Pour obtenir une bonne homogénéité de distribution des pixels (ou cases) de la carte à établir, on choisit de préférence des suites SU comportant toutes le même nombre n d'échantillons, par exemple n = 256. En appliquant une transformée de Fourier rapide TFR à ces 256 échantillons, et à raison d'un point par paire d'échantillons, on obtient, en sortie de la TFR, 128 raies espacées de 975 GHz. Chaque raie se traduit par un échantillon numérique fréquenciel dont le numéro d'ordre, parmi les 128 est représentatif de la distance d'une cellule de sol de forme sensiblement rectangulaire sur la radiale et dont l'amplitude est représentative de la Surface Equivalente Radar (SER) de la cellule considérée. Cette amplitude est proportionnelle à $\sqrt{SER}$. Pour 4000 échantillons temporels par dent de scie de durée $T_M$ et une ouverture en gisement variant de +15° à -15° ; on obtient ainsi une carte de 15 radiales, l'écartement angulaire entre deux radiales adjacentes étant égal à 2°, soit sensiblement égal à l'ouverture en gisement $\theta$d du pinceau de rayonnement.

Le boîtier électronique de traitement 7 représenté à la figure 4 comporte une mémoire d'échantillons temporels 28 qui est reliée au bus 25 et, par un bus 29, à un groupe de processeurs spécialisés de traitement de signal, 31, qui effectuent l'analyse spectrale du signal de battement et, éventuellement, des traitements d'image. Le groupe de processeurs 31 est relié par un bus bidirectionnel 32 à une mémoire d'échantillons fréquenciels de carte radioélectrique 33. Le bus bidirectionnel 32 est lui-même relié par un bus bidirectionnel 34 à un processeur de gestion non spécialisé 35 ayant en charge la gestion du comportement de l'ensemble du senseur 1 et le calcul de certains paramètres. Le processeur de gestion 35 est relié par un bus 36 à une interface de commande 37 qui engendre les signaux SE, AE et CG, et comporte un bus de sortie 38. Le groupe de processeurs 31 est par exemple constitué de trois processeurs de type PSM dérivés du processeur de Signal Intégré PSI développé conjointement par les sociétés françaises TRT et EFCIS. Ces processeurs sont de technologie CMOS et ont un temps de cycle de l'ordre de 100 ns. Comme processeur de gestion 35, on peut utiliser un processeur de type 68000.

Le processus complet de génération de la carte est maintenant décrit, à l'appui d'un exemple numérique particulier.

Sur la commande du processeur 35, cette commande pouvant être d'origine automatique ou manuelle, un ordre de déclenchement d'émission est transmis, via le bus 36 et l'interface 37, sous forme du signal logique SE, au générateur de rampe 11 qui fournit, à un instant $t_1$, un signal de tension au VCO 13 apte à provoquer en sortie de ce dernier un signal radio de fréquence $F_M + \Delta F/2$, voir figures 4 et 6. Le signal radio émis est modulé linéairement en fréquence, à partir de l'instant $t_1$, selon une fréquence décroissante, sur 300 MHz, la fréquence moyenne $F_M$ de la dent de scie à pente négative étant de 15 GHz. La durée de la modulation est fixée à TM = 40 ms. La fin de l'émission de la dent de scie déclenchée à l'instant $t_2$ par le signal logique de commande d'arrêt de l'émission AE qui est fourni par l'interface 37 à l'amplificateur 14, peut être obtenue par action monostable à partir du processeur de gestion 35 par exemple par comptage de temps tel que : $t_2$ = $t_1$ + 40 ms. Cette excursion de fréquence de 300 MHz provoque un balayage du pinceau de rayonnement de 30° en gisement. La bande d'analyse du signal de battement observé, sélectionnée par les filtres passe-bande 19 et 21 est par exemple comprise entre 25 kHz et 125 kHz, correspondant à une plage de distance allant de $d_{mini}$ = 250 m à $d_{maxi}$ = 2000 m. On notera à cet égard que le procédé de mesure des distances par le radar FM-CW est insensible aux variations d'incidence dans un plan vertical du support du senseur, c'est-à-dire aux mouvements de tangage, pourvu que la zone à explorer au sol demeure intégralement dans le pinceau radar ; l'ouverture en site du pinceau, par exemple égale à 23° est calculée pour tenir compte de l'angle de tangage du support, par exemple compris entre 0 et 7°. En 22, figure 4, le signal de battement est échantillonné à une fréquence d'échantillonnage $T_s$ de 250 kHz, soit une période d'échantillonnage de 4 $\mu$s, et codé sur 12 bits en parallèle sur le bus 25, soit une dynamique de codage de 72 dB environ. Le nombre total q d'échantillons à traiter pour former une carte est, dans cet exemple numérique, égal à 10000. Les échantillons sont prélevés et traités par le processeur d'analyse spectrale 31 par groupes successifs de n échantillons, par exemple n = 256 échantillons choisis consécutivement, ce qui permet d'engendrer, pour chaque groupe, une radiale de l'image. Le temps d'intégration de l'énergie est d'environ 1 ms pour chaque point d'image ou case de la carte ; ceci a les conséquences suivantes :

- La déviation en gisement du faisceau radar pendant la mesure est environ égale à 0,75°, ce qui est de l'ordre du quart de l'ouverture en gisement du pinceau d'analyse. On peut donc bien considérer que c'est la même bande de terrain qui fait l'objet de l'analyse sur une radiale de l'image.
- La résolution spectrale de l'analyse fréquencielle est de l'ordre de 975 Hz (975 = $10^6$/256x 4).

En principe, la définition obtenue sur la carte radioélectrique est suffisamment élevée pour qu'il ne soit pas nécessaire d'utiliser une fenêtre de pondération de type Hamming ou Cosinus sur le signal soumis à l'algorithme de TFR dans le processeur 31. En effet, les lobes secondaires d'une analyse spectrale appliquée à un signal observé dans une fenêtre rectangulaire, comme c'est le cas ici, sont situés à environ 13 dB au-dessous du lobe principal. Ces lobes secondaires pourraient être gênants seulement si l'on cherchait à mettre en évidence deux cibles proches dont les échos sont très différents, c'est-à-dire une différence supérieure à 13 dB. Or, le relevé d'un paysage ne nécessite généralement pas de tels contrastes. L'absence de fenêtre de pondération ne provoque pas d'élargissement du lobe principal de la raie élémentaire issue de la TFR, ni une perte d'amplitude, ce qui se traduirait par une diminution du gain de traitement.

Chaque groupe de 256 échantillons temporels séparés par $T_S$ = 4 $\mu$s se traduit, après traitement par TFR, sur le bus 32, sous forme d'une suite SV de n/2 = 128 échantillons fréquenciels soit 128 raies espacées de 975 Hz. On analyse donc l'énergie contenue dans le signal de battement de 25 à 125 kHz avec un pas de 975 Hz qui correspond à un pas en distance d égal à 19,5 m, déduit de la formule (3). On a représenté à la figure 8a une suite SV de 128 échantillons fréquenciels 41 emmagasinés dans la mémoire d'échantillons fréquenciels 33 (figure 4) ainsi que leur enveloppe 42, pour une radiale donnée, cette suite étant déduite d'une suite SU ou groupe de 256 échantillons temporels. On a porté en abscisse la distance d en mètres et en ordonnée l'énergie ou amplitude A de chaque raie. Les échantillons sont rangés dans la mémoire 33 dans le même ordre que celui représenté à la figure 8a. Les suites SU sont traitées successivement dans l'ordre chronologique d'arrivée des échantillons temporels et les suites résultantes SV sont rangées dans le même ordre dans la mémoire 33. La mémoire d'échantillons temporels contient p suites SU adjacentes sur la durée $T_M$ de façon qu'on ait l'égalité pn = q, et que le numéro d'ordre i (i variant de 1 à p) de chaque suite SU constitue l'adresse de la radiale constituée par la suite SV déduite de chaque suite SU considérée. On obtient ainsi de manière simple une bijection entre l'ensemble des adresses des échantillons fréquenciels 41 et l'ensemble des coordonnées polaires des points de la carte. Chaque adresse se compose de deux vecteurs dont l'un, représentatif de l'argument $\theta$ du point ou case, correspond au numéro d'ordre i (i variant de 1 à p) d'une suite SV et l'autre, représentatif du module $\rho$ du point ou case, correspond au numéro d'ordre j (j variant de 1 à n/2) d'un échantillon dans la suite SV considérée. Chaque point est représentatif d'une case sensiblement en forme de rectangle sur le sol, le côté du rectangle dans le sens radial étant environ égal à 20 m et le côté dans le sens transversal environ égal à : 13x $10^{-3}$d.

La configuration obtenue ou carte, représentée à la figure 8b, se compose de 40 radiales, séparées par un pas angulaire de 0,75°, chaque radiale comportant environ 130 cases. Comme on le verra ci-dessous, il peut s'avérer nécessaire de réduire les dimensions de la carte pour en éliminer des parties sujettes à des distorsions trop fortes en conséquence de mouvements parasites engendrés par le support du senseur lorsque ce dernier se trouve à bord d'un engin mobile. On notera que ces parties à supprimer concernent plutôt la périphérie de la configuration de la figure 8b que son centre.

On a vu ci-dessus que les horloges internes au système permettent à elles seules d'obtenir un adressage correct représentatif des points de la carte. Ceci est vrai, pour une évolution correcte de l'angle de gisement $\alpha_d$ à associer à une radiale ayant un numéro d'ordre donné, moyennant un étalonnage préalable entre l'excursion de fréquence $\Delta F$ et la variation de l'angle de gisement $\alpha_d$ qui en résulte. En effet, pour une même valeur de TM et deux valeurs $\Delta F$ et $\Delta F'$ différentes mais avec la même fréquence centrale FM, les variations de l'angle $\alpha_d$, symétriques par rapport à l'axe $\Delta$ ont des amplitudes différentes, ce qui n'est pas pris en compte par l'adressage interne au boîtier de traitement. Un adressage des radiales dans la mémoire 33 qui fournit une indication correcte de l'angle de gisement $\alpha_d$ de chaque radiale de la carte est obtenu en prélevant et en échantillonnant le signal de sortie SG du générateur 11. Dans l'exemple décrit ce signal de tension est, avec une très bonne approximation, directement proportionnel à la fréquence émise et donc à l'angle de gisement $\alpha_d$ de l'axe du faisceau comme représenté à la figure 6. Si la modulation de fréquence n'est pas rigoureusement linéaire il existe de la même façon une loi de correspondance définie et prévisible entre la tension et l'axe du faisceau. Un échantillon du signal SG pour chaque suite SU, soit n échantillons, peut suffire, ce qui représente une fréquence d'échantillonnage du signal SG égale à $T_S/p$. Il peut s'avérer nécessaire de décaler les suite SU, dans le but d'effectuer des corrections, par rapport à la succession des suites SU indiquées ci-dessus : par exemple, il est possible de choisir des suites SU' présentant un nombre n' d'échantillons supérieur ou inférieur à la valeur nominale n choisie à l'origine, ce qui augmente ou diminue d'autant le nombre de cases dans le sens radial. L'adresse de chaque radiale dans la mémoire 33 se déduit alors par interpolation des n échantillons d'angles de gisement, le calcul étant effectué par le processeur 35. Les adresses de radiale et de point dans la radiale sont contenues dans une mémoire d'adresse incorporée au processeur de gestion 35.

Les points de la carte radioélectrique sous forme d'échantillons numériques dans la mémoire 33 peuvent être extraits de cette dernière par le processeur 35, selon l'adressage décrit ci-dessus et fournis au bus 38 par exemple à des fins d'affichage sur un écran de télévision ou de tube cathodique, non représentés. On notera que le traitement des échantillons temporels s'effectue avec un léger décalage après la durée TM, la vitesse de traitement étant compatible avec la vitesse de détection. Ceci permet de rendre jointives les dents de scie d'émission pourvu que les capacités des mémoires 28 et 33 soient choisies suffisamment grandes pour que l'exploitation des échantillons relatifs à une dent de scie puisse être effectuée pendant que les échantillons de la dent de scie suivante sont emmagasinés dans la mémoire 28. Lorsque le support 3 du senseur est fixé au sol ou à un bâtiment fixe ou encore à un engin mobile dont la vitesse et les mouvements parasites de lacet et de roulis sont lents, le senseur décrit ci-dessus convient, sans que des corrections ou des masquages de certaines parties de la carte ne soient nécessaires. Il en est de même si l'engin porteur est un aéronef muni d'une plateforme gyrostabilisée ou une plateforme stabilisée commandée par une centrale à inertie et que cette dernière constitue le support du senseur, une plateforme gyrostabilisée étant obtenue par montage d'un groupe de gyroscopes sur la plateforme. Il peut se faire aussi que le support 3 du senseur soit rigidement fixé à l'aéronef ; si, dans ce dernier cas les mouvements de lacet et de roulis sont rapides par exemple de l'ordre de 20°/s pour l'angle de lacet autour d'un axe vertical et de l'ordre de 50°/s pour l'angle de roulis autour de l'axe $\Delta$, il faut soit se satisfaire d'une carte déformée, soit ne pas prendre en compte certaines radiales, les radiales les plus affectées par la déformation étant celles qui résultent des derniers points échantillonnés au cours de la dent de scie du signal émis.

On décrit maintenant des modes de réalisation du senseur selon l'invention qui permettent de s'affranchir des mouvements de lacet de l'aéronef, dans le cas où le support du senseur est rigidement fixé à l'aéronef, ce dernier étant muni d'une centrale à inertie. A raison d'un angle de lacet variant de 20°/s, pendant les 40 ms que dure l'intégration de l'énergie du radar pour la formation de la carte, l'aéronef, et par suite l'antenne 2 du senseur qui lui est rigidement liée, a tourné par rapport à un axe vertical d'un angle maximal de : $40 \cdot 10^{-3} \times 20 = 0,8°$. Suivant que la rotation de l'aéronef s'est effectuée dans le même sens ou en sens inverse de la déflexion du pinceau de rayonnement, le secteur exploré au sol sera de 30,8° ou bien de 29,2°. Le mouvement de lacet engendre donc un écartement ou un rapprochement parasite entre deux radiales successives de la carte au maximum égal à $0,8/40 = 0,02°$, soit pour un pas angulaire entre radiales de 0,75°, une variation de 2,7 % environ ($0,8/30 = 0,02/0,75 = 2,7$ %). On a supposé pour effectuer ce calcul que la vitesse angulaire du mouvement de lacet restait constante pendant les 40 ms que dure la dent de scie, ce qui est vrai avec une très bonne approximation.

Pour compenser l'effet de lacet, il suffit donc de contracter, pour un mouvement de lacet allant dans le même sens que le faisceau radar, respectivement de dilater, pour des mouvements allant en sens inverses, le nombre n d'échantillons de chaque suite SU. Ceci revient à dire que lesdits moyens de traitements numériques, en l'occurrence le processeur de gestion 35, calculent le nombre n d'échantillons de chaque suite SU de façon à le rendre proportionnel à la valeur : $\alpha_{dmax} - \theta_l$, $\theta_l$ étant la valeur de l'angle de lacet comptée en valeur algébrique pendant la durée TM, en comptant positivement $\theta_l$ lorsque l'angle de lacet se produit dans le même sens que le balayage du faisceau de rayonnement et négativement dans le cas contraire. Partant d'une suite nominale de 256 échantillons, la correction du mouvement de lacet pris en exemple au paragraphe précédent s'obtient en opérant sur des suites SU′ telles que :

n′ = 256 x 1,027 = 263 ou

n′ = 256 x 0,973 = 249.

A cet effet, la valeur $\theta_l$ de l'angle de lacet pendant la durée $T_M$ est fournie sous forme numérique par la centrale à inertie au processeur 35 qui effectue les calculs nécessaires. Cette façon d'opérer revient, selon un autre mode de réalisation anti-lacet du senseur, à soustraire de l'angle de gisement $\alpha_{di}$ du pinceau de rayonnement, proportionnel à l'instant $t_i$ qui marque le début de chaque suite SU, la valeur comptée en valeur algébrique $\theta l_i$ de l'angle de lacet indiqué par la centrale à inertie à partir de l'instant $t_1$, ce qui transforme une suite SU en une suite SU′ telle qu'indiquée ci-dessus, la suite SU′ étant ensuite transformée par TFR en une suite SV′ qui a comme adresse de radiale la valeur : $\alpha_{di}$ - $\theta l_i$.

L'antenne directive 2 est par exemple celle qui est décrite dans la demande de brevet européen 0 110 479. Cette dernière antenne est une antenne plate à fente utilisant la technologie des circuits imprimés, fonctionne à une fréquence nominale de l'ordre de 10 GHz, procure une déviation linéaire du faisceau de rayonnement de l'ordre de 60° et ses dimensions principales sont celles d'un rectangle d'environ 20 cm de long et 2 cm de large. Comme le diagramme de rayonnement a la forme d'une demi nappe conique autour de l'axe principal de l'antenne, seule la partie centrale du faisceau, proche du plan méridien de l'antenne est assimilable à un plan et peut être utilisée au titre du faisceau radar au pinceau de rayonnement 4 de la figure 2. On souhaite obtenir un balayage en gisement relativement rapide du faisceau radar, ce qui peut être obtenu par déphasage dans une ligne dispersive classique comme décrit dans l'ouvrage déjà cité Radar Handbook de Skolnik, chapitre 13. On décrit ci-dessous en référence aux figures 9, 10 et 11 une antenne fonctionnant à 15 GHz conçue spécialement pour le senseur selon l'invention.

Le diagramme en site déjà décrit en référence à la figure 2 est obtenu en plaçant après l'excitation un cornet en forme de dièdre de 50 mm d'ouverture, indiqué par la double flèche 45, figure 9, assurant un diagramme d'environ 30° à la moitié de la puissance, pointé vers -12,5° de l'axe Δ du senseur. Le choix des dimensions du guide d'ondes 46, utilisé pour le rayonnement et en l'occurrence replié sur lui-même, est le suivant : on a vu que le débattement angulaire est de plus 15° à moins 15° lorsque la fréquence varie de 300 MHz pour une fréquence centrale de 15 GHz. Pour éviter les lobes secondaires dus à l'effet de réseau des sources rayonnantes, il faut que la distance 47 séparant deux sources 48 soit inférieure à 14,6 mm, les sources étant alignées. Pour éviter la propagation d'un mode orthogonal dans le guide, il faut une hauteur de guide inférieure à 9,9 mm. On choisit par exemple une hauteur 49 de 8,3 mm, permettant d'avoir des pertes faibles et une épaisseur de paroi 51 de 3 mm, ce qui résulte en une distance entre deux sources rayonnantes 48 adjacentes de 11,3 mm. Le déphasage est d'autant plus rapide que le guide est plus proche de la fréquence de coupure. Les pertes sont aussi d'autant plus grandes que le système est proche de la fréquence de coupure. Par ailleurs, le déphasage doit être égal à un nombre impair de demi longueurs d'onde entre deux sources successives. Les trois dernières contraintes indiquées conduisent, pour une hauteur hors tout d'environ 150 mm à une largeur interne LI du guide de 11,47 mm. L'antenne peut être réalisée en alliage léger usiné ; elle comporte par exemple 29 sources indépendantes distantes de 11,3 mm, soit environ 316 mm entre axes de la première à la dernière source. La distance entre deux sources successives le long du guide est de 14,3 mm et les pertes dans le guide sont d'environ 0,79 dB par mètre linéique. Pour que le diagramme de rayonnement soit le plus étroit possible, toutes les sources rayonnent la même énergie. L'ouverture en gisement de l'antenne, $\theta_d$, est égale à 2,55° à la moitié de la puissance. Le gain géométrique de l'antenne est d'environ 29,5 dB. Le gain réel, compte tenu de 1,70 dB de pertes dans la structure et 0,7 dB de pertes sur un radôme éventuel est de 27 dB environ. L'antenne à balayage en gisement par excursion de la fréquence émise peut aussi être constituée par une ligne dispersive de technologie imprimée sur un substrat, ce qui permet d'obtenir des fréquences de fonctionnement plus élevées, si nécessaire.

Le traitement numérique, effectué sur les échantillons du signal Fb, permet, par sa souplesse et sa rapidité d'effectuer des corrections sur la carte lorsque cette dernière est affectée de déformations dues à des déplacements parasites du senseur pendant le temps TM de mesure, tels que l'effet Doppler ou l'effet de roulis. La connaissance de la vitesse ou de l'angle de roulis instantanés du senseur permet d'effectuer les calculs nécessaires et d'agir soit sur les suites d'échantillons temporels du signal Fb soit sur les suites d'échantillons fréquenciels résultantes et sur leur adressage dans le sens de corrections de la carte, ces calculs étant à la portée de l'informaticien moyen et ces corrections restant, d'une façon générale dans le cadre de l'invention. Pour ces corrections, il peut se faire que les suites d'échantillons temporels sélectionnées pour traitement de TFR ne soient pas nécessairement adjacentes ni qu'elles comportent le même nombre d'échantillons et que dans les suites d'échantillons fréquenciels résultantes seules certaines plages de points soient retenues, les autres étant éliminées comme aberrantes. Par ailleurs, une redondance résulte du fait que l'ouverture en gisement de l'antenne est généralement supérieure à l'écart angulaire prévu entre radiales adjacentes de la carte. Cette redondance peut être mise à profit en sélectionnant des suites d'échantillons temporels imbriquées et en effectuant une corrélation sur les suites d'échantillons fréquenciels résultantes obtenues ; ces traitements numériques, par ailleurs connus en soi, restent aussi dans le cadre de l'invention.

En ce qui concerne la linéarité de l'émission de la dent de scie de fréquence par le radar, on notera que cette linéarité est recherchée, pour la mise en oeuvre de l'invention, mais qu'il n'est pas nécessaire de l'obtenir rigoureusement. Il suffit en effet d'obtenir une loi de fréquence en fonction du temps qui soit connue, approximativement linéaire, dont les distorsions, définies a priori ou mesurées dans une ligne à retard interne, sont prises en compte par les étages du calculateur de bord.

**Revendications**

1. Senseur radioélectrique (1) muni d'un support (3) et d'une antenne émettrice-réceptrice (2), pour l'établissement d'une carte radioélectrique d'un site, après une détection, de durée TM, ladite antenne (2), fixée rigidement au support (3) dudit senseur, étant du type à balayage en gisement d'angle $\alpha_d$ d'un pinceau de rayonnement provoqué par excursion de la fréquence émise F, ledit senseur (1) qui fonctionne à une fréquence comprise entre 1 et 100 GHz étant du type à onde continue modulée en fréquence et comportant à cet effet un générateur de rampe de tension (11) qui commande un générateur de signal hyperfréquence (12), de fréquence F, modulé à peu près linéairement en fréquence selon une dent de scie pendant ladite durée TM selon une excursion de fréquence $\Delta$F, TM et $\Delta$F étant fixes et prédéterminés, des moyens (15) pour réaliser le battement entre l'onde émise et l'onde reçue en écho pour engendrer un signal de battement soustractif $F_b$ de fréquence $f_b$, ledit senseur comportant en outre en aval desdits moyens de battement :

    a - un circuit de traitement analogique du signal (17) comprenant des moyens d'amplification (18) et de filtrage (19, 21) du signal $F_b$,

    caractérisé en ce qu'il comporte en outre, pour l'établissement en coordonnées polaires de ladite carte radioélectrique :

    b - des moyens de numérisation au moins du signal $F_b$ amplifié et filtré (22),

    c - une mémoire d'échantillons temporels (28) qui contient au moins les q échantillons du signal $F_b$ prélevés au cours de la durée TM,

    d - une mémoire d'échantillons fréquenciels (33) de carte radioélectrique et

    e - des moyens de traitements numériques (31) effectuant au moins une transformation temporelle-fréquencielle sur des suites SU d'échantillons temporels successifs, prélevés avec un léger décalage retard par rapport à la durée TM dans la mémoire d'échantillons temporels (28), chaque suite SU correspondant à une variation de balayage en gisement $\Delta \alpha_{dc}$ égale à l'ouverture en gisement $\theta_d$, de 1° à 2°, dudit pinceau de rayonnement, les suites SU, au nombre de p, typiquement compris entre 20 et 50, comportant un nombre n d'échantillons, nétant typiquement compris entre 200 et 300, et fournissant à la mémoire d'échantillons fréquenciels (33) des suites SV d'échantillons fréquenciels, à raison d'une suite SV pour chaque suite SU, l'amplitude de chaque échantillon fréquenciel étant représentative d'un point dudit site et son adresse étant représentative des coordonnées polaires de ce point du site, de façon telle que chaque suite SV constitue au moins pour partie une partie de radiale de la carte.

2. Senseur radioélectrique selon la revendication 1 caractérisé en ce que ledit support (3) est fixé au sol ou à un bâtiment fixe.

3. Senseur radioélectrique monté sur un aéronef muni d'une centrale à inertie, selon la revendication 1, caractérisé en ce que ledit support (3) est une plateforme stabilisée solidaire de l'aéronef, dont la stabilisation est obtenue à partir de la centrale à inertie de l'aéronef ou bien à partir d'un groupe de gyroscopes montés sur la plateforme.

**4.** Senseur radioélectrique monté sur un aéronef, selon la revendication 1, caractérisé en ce que ledit support (3) est rigidement fixé audit aéronef.

**5.** Senseur radioélectrique monté sur un aéronef selon l'une des revendications 3 ou 4, caractérisé en ce que les suites SU au nombre de p sont adjacentes et comportent le même nombre d'échantillons sur la durée TM de façon que l'égalité pn = q soit vérifiée et que le numéro d'ordre i (i variant de 1 à p) de chaque suite SU constitue l'adresse de la radiale constituée par la suite SV déduite de chaque suite SU considérée.

**6.** Senseur radidoélectrique monté sur un aéronef muni d'une centrale à inertie, selon les revendications 1, 4 et 5 prises ensemble, caractérisé en ce que lesdits moyens de traitements numériques (31) calculent le nombre n de façon à le rendre proportionnel à la valeur $\alpha_{dmax} - \theta_1$, $\theta_1$ étant la valeur de l'angle de lacet comptée en valeur algébrique pendant la durée TM.

**7.** Senseur radioélectrique monté sur un aéronef muni d'une centrale à inertie selon les revendications 1 et 4 prises ensemble, caractérisé en ce que lesdits moyens de numérisation (22) échantillonnent le signal SG émis par ledit générateur de rampe de tension (11), les échantillons du signal SG étant emmagasinés dans ladite mémoire d'échantillons temporels (28), et que lesdits moyens de traitement (31) calculent le début de chaque suite SU en prenant en compte une valeur d'échantillons du signal SG et, le cas échéant, une valeur associée de l'angle de lacet $\theta_1$.

**8.** Senseur radioélectrique selon l'une des revendications précédentes, caractérisé en ce que ladite antenne à balayage en gisement par excursion de la fréquence émise (2) est une ligne dispersive constituée par un guide d'ondes (46) replié sur lui-même comportant des sources de rayonnement (48) séparées entre elles par un nombre impair de demi longueurs d'onde, lesdites sources étant aliguées et rayonnant dans un cornet en forme de dièdre (45).

**9.** Senseur radioélectrique selon l'une des revendications 1 à 7, dans lequel ladite antenne à balayage en gisement par excursion de la fréquence émise est une ligne dispersive de technologie imprimée sur un substrat.

**Claims**

**1.** Radio-frequency sensor (1) fitted with a support (3) and with a transmitter/receiver antenna (2), for setting up a radio-frequency map of a site, after a detection, of duration TM, the said antenna (2) rigidly fixed to the support (3) of the said sensor, being of the type with azimuth sweeping by angle $\alpha_d$ of a beam of radiation, caused by excursion of the frequency emitted F, the said sensor (1) which operates at a frequency lying within 1 and 100 GHz being of the frequency modulated-continuous wave type and including for this purpose a voltage ramp generator (11) which controls a microwave signal generator (12), of frequency F, modulated approximately linearly in frequency with a sawtooth form during the said duration TM with a frequency excursion $\Delta F$, TM and $\Delta F$ being fixed and predetermined, means (15) for producing the interference between the wave transmitted and the wave received as an echo in order to generate a subtractive interference signal $F_b$ of frequency $f_b$, the said sensor additionally including, downstream of the said interference means:

a - a circuit (17) for analogue processing of the signal, comprising amplification (18) and filtering (19, 21) means for the signal $F_b$,

characterized in that it additionally includes, for setting up the said radio-frequency map in polar coordinates:

b - means (22) for digitizing at least the amplified and filtered signal $F_b$,

c - a time-domain sample memory (28) which contains at least the q samples of the signal $F_b$ which are taken during the duration TM,

d - a radio-frequency map frequency-domain sample memory (33) and

e - digital processing means (31) making at least one time/frequency transform of the sequences SU of successive time-domain samples which are taken with a slight delay offset with respect to the duration TM from the time-domain sample memory (28), each sequence SU corresponding to an azimuth sweep variation $\Delta\alpha_{dc}$ equal to the azimuthal opening $\theta_d$, of 1° to 2°, of the said beam of radiation, the sequences SU, of which there are p, p being typically between 20 and 50, including a number of samples n, n lying typically between 200 and 300, and supplying the frequency-domain

EP 0 322 005 B1

sample memory (33) with sequences SV of frequency-domain samples, at the rate of one sequence SV for each sequence SU, the amplitude of each frequency-domain sample being representative of one point of the said site, and its address being representative of the polar coordinates of this point of the site, such that each sequence SV constitutes, at least in part, a radial part of the map.

2. Radio-frequency sensor according to Claim 1, characterized in that the said support (3) is fixed to the ground or to a fixed building.

3. Radio-frequency sensor mounted on an aircraft fitted with an inertial unit, according to Claim 1, characterized in that the said support (3) is a stabilized platform integral with the aircraft, the stabilization of which is obtained from the inertial unit of the aircraft or alternatively from a group of gyroscopes mounted on the platform.

4. Radio-frequency sensor mounted on an aircraft, according to Claim 1, characterized in that the said support (3) is rigidly fixed to the said aircraft.

5. Radio-frequency sensor mounted on an aircraft, according to one of Claims 3 or 4, characterized in that the sequences SU, of which there are p, are adjacent and include the same number of samples over the duration TM, such that the equality pn = q is satisfied and that the rank i (i varying from 1 to p) of each sequence SU constitutes the address of the radial component consisting of the sequence SV calculated from each sequence SU considered.

6. Radio-frequency sensor mounted on an aircraft fitted with an inertial unit, according to Claims 1, 4 and 5 taken together, characterized in that the said digital processing means (31) compute the number n such as to make it proportional to the value $\alpha_{dmax}-\theta_1$, $\theta_1$ being the angle of yaw calculated as an algebraic value during the duration TM.

7. Radio-frequency sensor mounted on an aircraft fitted with an inertial unit, according to Claims 1 and 4 taken together, characterized in that the said digitization means (22) sample the signal SG transmitted by the said voltage ramp generator (11), the samples of the signal SG being stored in the said time-domain sample memory (28), and that the said processing means (31) calculate the start of each sequence SU by taking account of a value of samples of the signal SG and, if appropriate, a value associated with the angle of yaw $\theta_1$.

8. Radio-frequency sensor according to one of the preceding claims, characterized in that the said antenna (2) with azimuth sweeping by excursion of the transmitted frequency is a dispersive line consisting of a waveguide (46) folded on itself, including radiation sources (48) separated from each other by an odd number of half-wavelengths, the said sources being aligned and radiating in a horn of dihedral shape (45).

9. Radio-frequency sensor according to one of Claims 1 to 7, in which the said antenna with azimuth sweeping by excursion of the transmitted frequency is a dispersive line employing the technology of printing on a substrate.

**Patentansprüche**

1. Radioelektrischer Sensor (1), der mit einem Träger (3) und einer Sende/Empfangsantenne (2) versehen ist, für die Herstellung einer radioelektrischen Karte einer Landschaft nach einer Erfassung der Dauer TM, wobei die Antenne (2), die am Träger (3) des Sensors starr befestigt ist, vom Typ mit seitlicher Strahlschwenkung um den Winkel $\alpha_d$ ist, wobei die Strahlung durch Auswanderung der ausgesandten Frequenz F hervorgerufen wird, wobei der Sensor (1), der bei einer Frequenz im Bereich von 1 bis 100 GHz arbeitet, vom Typ mit frequenzmodulierter kontinuierlicher Welle ist und hierzu versehen ist mit einem Spannungsrampen-Generator (11), der einen Generator (12) für Höchstfrequenzsignale steuert, welche die Frequenz F besitzen und während der einer Frequenzauswanderung ΔF entsprechenden Dauer TM gemäß einem Sägezahn annähernd linear frequenzmoduliert sind, wobei TM und ΔF fest und vorgegeben sind, sowie mit Mitteln (15), um eine Interferenz zwischen der ausgesandten Welle und der als Echo empfangenen Welle auszuführen, um ein subtraktives Interferenzsignal $F_b$ mit der Frequenz $f_b$ zu erzeugen, wobei der Sender außerdem ausgangsseitig zu den Interferenzmitteln enthält:

14

a - eine analoge Signalverarbeitungsschaltung (17), die Mittel für die Verstärkung (18) und die Filterung (19, 21) des Signals $F_b$ enthält,

dadurch gekenneichnet, daß sie außerdem für die Herstellung der radioelektrischen Karte in Polarkoordinaten enthält:

b - Mittel für die Digitalisierung wenigstens des verstärkten und gefilterten Signals $F_b$ (22),

c - einen Speicher für Zeit-Abtastwerte (28), der wenigstens die q Abtastwerte des Signals $F_b$ enthält, die während der Dauer TM abgegriffen werden,

d - einen Speicher von Frequenz-Abtastwerten (33) der radioelektrischen Karte und

e - digitale Verarbeitungsmittel (31), die an den Folgen SU von aufeinanderfolgenden Zeit-Abtastwerten, die mit einer leichten Verzögerung in bezug auf die Dauer TM im Speicher für Zeit-Abtastwerte (28) abgegriffen werden, wenigstens eine Zeit-Frequenz-Transformation ausführen, wobei jede Folge SU einer Änderung $\Delta\alpha_{dc}$ der seitlichen Strahlschwenkung entspricht, die gleich der seitlichen Öffnung $\theta_d$ von 1° bis 2° des Strahlungsbündels entspricht, wobei die Folgen SU mit der Anzahl p, die typischerweise im Bereich von 20 bis 50 liegt, eine Anzahl n von Abtastwerten enthalten, wobei n typischerweise im Bereich von 200 bis 300 liegt, und zum Frequenz-Abtastwert-Speicher (33) Folgen SV von Frequenz-Abtastwerten in dem Verhältnis liefern, in dem jeder Folge SU eine Folge SV entspricht, wobei die Amplitude eines jeden Frequenz-Abtastwertes einen Punkt der Landschaft darstellt und wobei seine Adresse die Polarkoordinaten dieses Landschaftspunktes darstellt, derart, daß jede Folge SV wenigstens zum Teil einen radialen Teil der Karte bildet.

2. Radioelektrischer Sensor gemäß Anspruch 1, dadurch gekennzeichnet, daß der Träger (3) am Boden oder an einem festen Gebäude befestigt ist.

3. Radioelektrischer Sensor, der in einem mit einem Trägheitsnavigationssystem versehenen Flugzeug angebracht ist, gemäß Anspruch 1, dadurch gekennzeichnet, daß der Träger (3) eine mit dem Flugzeug verbundene, stabilisierte Plattform ist, deren Stabilisierung anhand des Trägheitsnavigationssystems des Flugzeugs oder aber anhand einer Gruppe von an der Plattform angebrachten Gyroskopen erhalten wird.

4. Radioelektrischer Sensor gemäß Anspruch 1, dadurch gekennzeichnet, daß der Träger (3) am Flugzeug starr befestigt ist.

5. Radioelektrischer Sensor, der in einem Flugzeug angebracht ist, gemäß einem der Ansprüche 3 oder 4, dadurch gekennzeichnet, daß die Folgen SU in der Anzahl p benachbart sind und jeweils dieselbe Anzahl von Abtastwerten während der Dauer TM enthalten, so daß die Gleichheit pn = q erfüllt ist und die Ordnungszahl i (i läuft von 1 bis p) einer jeden Folge SU die Adresse der Halbgeraden ist, die von der Folge SV gebildet ist, die aus jeder betrachteten Folge SU abgeleitet wird.

6. Radioelektrischer Sensor, der in einem mit einem Trägheitsnavigationssystem versehenen Flugzeug angebracht ist, gemäß der Gesamtheit der Ansprüche 1, 4 und 5, dadurch gekennzeichnet, daß die digitalen Verarbeitungsmittel (31) die Anzahl n berechnen, so daß sie zum Wert $\alpha_{dmax}$ - $\theta_1$ ist, wobei $\theta_1$ der Wert des Gierwinkels ist, der als algebraischer Wert während der Dauer TM gezählt wird.

7. Radioelektrischer Sensor, der in einem mit einem Trägheitsnavigationssystem versehenen Flugzeug angebracht ist, gemäß der Gesamtheit der Ansprüche 1 und 4, dadurch gekennzeichnet, daß die Digitalisierungsmittel (22) das vom Spannungsrampen-Generator (11) ausgesandte Signal SG abtasten, wobei die Abtastwerte des Signals SG in dem Zeit-Abtastwert-Speicher (28) gespeichert sind, und daß die Verarbeitungsmittel (31) den Anfang einer jeden Folge SU unter Eerücksichtigung eines Abtastwertes des Signals SG und gegebenenfalls eines dem Gierwinkel $\theta_1$ zugehörigen Wertes berechnen.

8. Radioelektrischer Sensor gemäß einem der vorangehenden Ansprüche, dadurch gekennzeichnet, daß die Antenne mit seitlicher Strahlschwenkung durch Auswanderung der ausgesandten Frequenz (2) eine Streuleitung ist, die von einem auf sich selbst zurückgebogenen Wellenleiter (46) gebildet ist und Strahlungsquellen (48) enthält, die voneinander durch eine ungerade Anzahl von Halbwellenlängen getrennt sind, wobei die Quellen in einer Reihe angeordnet sind und in einem Trichter in Form eines Zweiflachs (45) strahlen.

9. Radioelektrischer Sensor gemäß einem der Ansprüche 1 bis 7, in dem die Antenne mit seitlicher Strahlschwenkung durch Auswanderung der ausgesandten Frequenz eine Streuleitung ist, die mit einer Technologie der bedruckten Substrate verwirklicht ist.

FIG.1

FIG.6

FIG.2

FIG.3

17

FIG.4

FIG.5a

FIG.5b

FIG.7

FIG.8a

FIG.8b

**FIG.10**

**FIG.11**

**FIG.9**